# EUROPEAN PATENT APPLICATION

(11) **EP 2 136 315 A1**
(43) Date of publication of application: **23.12.2009**
(21) Application number: 08158438.5
(22) Date of filing: 17.06.2008
(51) Int. Cl.: G06K 9/20, G06K 9/00

(54) **An electromagnetic imaging system, a method and a computer program product**

(71) Applicant: Nederlandse Organisatie voor Toegepast- Natuurwetenschappelijk Onderzoek TNO, 2628 VK Delft (NL)
(72) Inventor: Tettelaar, Peter, 2563-VA, Den Haag (NL); Schavemaker, Johannes Gerardus Maria, 2671-EE, Naaldwijk (NL); van der Mark, Wannes, 2315-EB, Leiden (NL); Noordam, Jan Corstiaan, 2271-AS, Voorburg (NL); Nennie, Frans Antonius, 2726-SR, Zoetermeer (NL); van der Houwen, Eric Herman, 2264-CR, Leidschendam (NL)
(74) Representative: Hatzmann, Martin

(57) **Abstract**

The invention relates to an electromagnetic imaging system for providing biometric data of a person. The system comprises a receiver for receiving electromagnetic waves propagating from the person's skin after reflection of an incident electromagnetic wave. The receiver is arranged for receiving, in a non-coherent manner, electromagnetic waves in the millimetre range. Further, the electromagnetic imaging system comprises a computer system that is arranged for processing the received electromagnetic waves independently of any characteristic of the incident electromagnetic wave.

## Description

The invention relates to an electromagnetic imaging system for providing biometric data of a person.

In the field of security systems, many devices are known for obtaining biometric data of a person, e.g. for identification purposes. As an example, iris scanners, fingerprint devices and photography based systems are known to identify persons.

In using photography based systems, optical data can be determined for characterizing a person's head or face. However, if the head and/or face is at least partially covered, the process of obtaining biometric data becomes less reliable because of lack of optical information. In particular, if the person disguises the face at least partially using skin covering cloths such as a shawl or a balaclava or wearing artificial attributes such as sunglasses, an artificial beard and/or a wig, the photography based system becomes less effective.

It is an object of the invention to provide an electromagnetic imaging system according to the preamble, wherein the disadvantage identified above is reduced. In particular, the invention aims at obtaining an electromagnetic imaging system according to the preamble that is more robust. Thereto, according to the invention, the electromagnetic imaging system comprises a receiver for receiving electromagnetic waves propagating from the person's skin after reflection of an incident electromagnetic wave, wherein the receiver is arranged for receiving, in a non-coherent manner, electromagnetic waves in the millimetre range, and a computer system that is arranged for processing the received electromagnetic waves independently of any characteristic of the incident electromagnetic wave.

By receiving, in a non-coherent manner, electromagnetic waves in the millimetre range, and by processing the received electromagnetic waves independently of any characteristic of an incident electromagnetic wave that reflects against a person's skin, an electromagnetic imaging system is obtained wherein biometric data is gathered more or less independently of any person's disguise, since the millimetre waves substantially penetrate the disguise without substantial attenuation.

As a result, a more robust imaging system for providing biometric data is obtained.

Advantageously, the processing step may comprise detecting trunk and/or limb features of the person, so that biometric data concerning trunk and/or limbs of the person are obtained in a more reliable and accurate manner than is generally possible when using a photography based system. Further, since torso and/or limb feature parameters are typically less sensitive to an absolute measurement deviation than head or face measurement data are, the system is more robust for the purpose of identification than the prior art system. In addition, since trunk and/or limb features are more discriminating than face parameters, in principle, a more accurate identification process can be performed. Obviously, the processing step may additionally or alternatively include detecting other body features of the person, such as head features.

The invention also relates to a method for providing biometric data of a person.

Further, the invention relates to a computer program product.

Other advantageous embodiments according to the invention are described in the following claims.

By way of example only, embodiments of the present invention will now be described with reference to the accompanying figures in which
Fig. 1 shows a schematic top view of an electromagnetic imaging system according to the invention;
Fig. 2 shows a schematic diagram of the system of Figure 1;
Fig. 3 shows a perspective view of a person to be identified; and
Fig. 4 shows a view of an image of the person in Figure 3.

It is noted that the figures shows merely preferred embodiments according to the invention. In the figures, the same reference numbers refer to equal or corresponding parts.

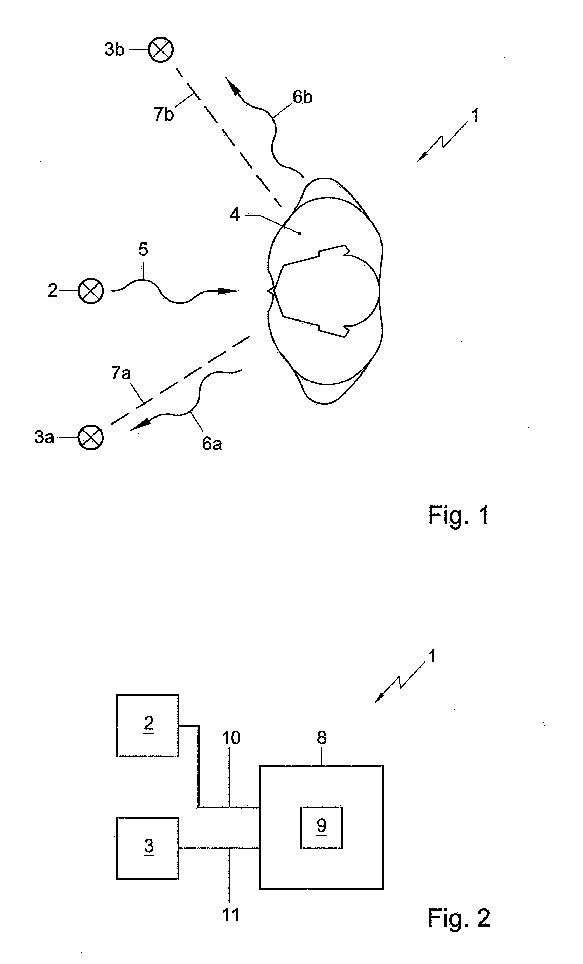

Figure 1 shows a first embodiment of an electromagnetic imaging system 1 according to the invention.

The system 1 is provided with an external electromagnetic source 2 for generating an electromagnetic wave 5 that is incident on a person 4 to be identified. Further, the system is provided with two external receivers 3a, 3b for receiving electromagnetic waves 6a, 6b propagating from the person's skin after reflection of the incident electromagnetic wave 5.

The external source 2 comprises a noise generator that is arranged for transmitting broadband, non-coherent electromagnetic waves 5 in the millimetre range. The receivers 3a, 3b are arranged for receiving, in a non-coherent manner, the reflected electromagnetic waves 6a, 6b in the millimetre range. Here, a central frequency of the received electromagnetic waves is in a range from circa 1 GHz to circa 1 THz, more preferably in a range from circa 10 GHz to 100 GHz. As an example, the receivers 3a, 3b are implemented as radiometers that are arranged for receiving millimetre waves at a central frequency of circa 34 GHz or in a range from circa 80-100 GHz. By employing electromagnetic waves in the millimetre range clothes and other disguises, such as an artificial beard are substantially transparent, thereby enabling an effective system for providing biometric data of the person 4 to be identified. Generally, by increasing the frequency, an improved resolution can be obtained in the biometric data. However, attenuation of the millimetre waves caused by any disguises might also increase, thereby deteriorating the process of providing biometric data.

By providing a broadband, non-coherent electromagnetic noise generator, a relatively simple electromagnetic non-coherent source is obtained. Of course, various other non-coherent sources could be applied, such as a resistive element source.

Advantageously, the external receivers 3 are implemented as radiometers, so that relatively cheap receivers have been obtained that are arranged to perform relatively accurate measurements over a relatively broad frequency band. It is noted, however, that one or more receivers can also be implemented otherwise, e.g. by an assembly of receiver elements wherein each of the receiver elements is optimized for receiving signals in a predetermined part of the millimetre wave electromagnetic spectrum. In principle, at least a number of the predetermined parts of the spectrum may at least partially overlap. Further, at least a number of the spectrum parts may also be chosen to be separate, without overlap.

In the embodiment shown in Figure 1, the receivers 3a, 3b are positioned such that they are substantially transversely with respect to a line of sight to the person 4. The lines of sight 7a, 7b are directed from the receivers 3a, 3b, respectively, towards the person 4 to be identified. Here, the lines of sight 7a, 7b are oriented mutually substantially transversely. As a result, a so-called stereoscopic measurement can be performed, e.g. for obtaining depth information such as information concerning the girth of the person 4, preferably substantially independently of a particular pose of the person 4.

In this respect, it is noted that the receivers 3a, 3b of the system 1 according to the invention can also be positioned otherwise, e.g. on opposite positions sideways from the person 4 to be identified. Further, the system 1 might comprise more than two receivers, e.g. three or four receivers. However, the system 1 can also be provided with a single receiver.

During the process of providing biometric data of the person 4 to be identified, an electromagnetic wave 5 is generated that impinges the skin of the person 4. After reflection at the skin, the millimetre waves 6a, 6b propagate away from the person 4 and are at least partially, in a non-coherent manner, received by the receivers 3a, 3b. Then, the received electromagnetic waves are processed independently of any characteristic of the incident electromagnetic wave 5.

Thereto, the imaging system 1 according to the invention further comprises a computer system 8 that is arranged for processing the received electromagnetic waves 6a, 6b independently of any characteristic of the incident electromagnetic wave 5.

Fig. 2 shows a schematic diagram of the system 1 of Figure 1. The computer system 8 comprises a processor 9 coupled to the external source 2 and to the receivers 3 via a first and a second input terminal 10, 11, respectively. It is noted that the processing step mentioned above can be performed either by dedicated hardware or by standard hardware that is loaded with software suitable for performing the data processing task.

The processing step comprises detecting features of the trunk and/or limb features of the person 4 to be identified.

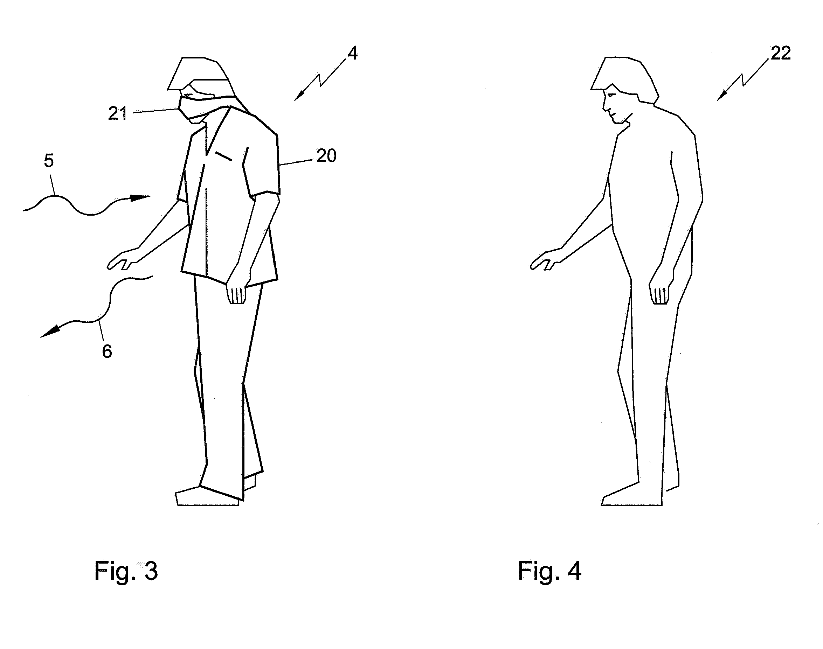

Fig. 3 shows a perspective view of a person 4 to be identified. The person 4 wears clothes 20 and a shawl 21 partially covering the face of the person 4.

Fig. 4 shows a view of an image 22 of the person 4 in Figure 3. As the clothes 20 and the shawl 21 are mainly transparent for the millimetre incident wave 5, the reflected wave 6 comprises geometrical skin information. As a result, biometric data can be obtained. By comparing the obtained biometric data with known biometric data of a particular or a multiple number of persons, the person 4 to be identified can actually be identified, even if he/she uses disguises body parts by optically covering them. As a result, also persons who reluctantly are screened can in principle easily be identified as the system can virtually obtain information that is disguised behind disguising material. Since the process of receiving the reflected wave is contactless with respect to the person's skin, the system 1 is able to perform the process of providing biometric data contactless, so that a flexible and practical imaging system is obtained that can be operable on an offset position.

In a specific embodiment according to the invention, the processing step comprises assigning numerical values to a biometric model, e.g. for classification and/or identification purposes. Otherwise, particular features of the person 4 to be identified can be estimated.

The process of comparing the biometric data with other data is preferably performed in a computer system. Alternatively or additionally, biometric data can be visualized and interpreted by a user of the system 1.

Optionally, the external source 2 and/or the receiver 3 is arranged to scan the person's skin, e.g. by dynamically focussing on skin parts of the person 4, either by moving system parts and/or by moving the person 4 to be identified. Alternatively, the system is arranged for statically performing the biometric data process.

It is noted that when a person 4 to be identified uses disguise material that reflects electromagnetic waves, such as metal, so that the biometric data process is frustrated, another identification process can be used. Moreover, the system 1 according to the invention can, in principle, also be used for concealed object detection, as metal parts of a concealed object generate high reflections.

The system 1 can be implemented relatively simply as the generation of non-coherent electromagnetic waves can be performed in a simple, cheap way. By using broadband electromagnetic waves, frequency information over a wide frequency band can be obtained for obtaining biometric data. Further, the system according to the invention might be fast in providing biometric data of the person 4 to be identified, optionally in digital format that is fit for further processing, archiving or for remote inspecting. Since on the one hand risk problems of the system 1 for the person 4 to be identified are practically zero and on the other hand the method for providing biometric data can be accomplished relatively fast, a new biometric data providing step can be performed immediately, if desired.

The system 1 according to the invention is well suited for application in security applications, such as in guarding air port locations or other border areas, securing public events and/or or assisting police services.

The invention is not restricted to the embodiments described herein. It will be understood that many variants are possible.

Instead of using a single external source 2 for generating the incident field, the system 1 according to the invention can also be provided with a multiple number of external sources for generating the incident field. Further, the system 1 can even be implemented without the use of an external source, e.g. by using an incident field that is already present in the space wherein the person is to be identified. As an example, such an incident field can be generated by artificial light sources or is naturally present in daylight.

Further, the system is optionally coupled with a separate biometric system to further improve the reliability and robustness of the overall system.

Other such variants will be obvious for the person skilled in the art and are considered to lie within the scope of the invention as formulated in the following claims.

## Claims

1. An electromagnetic imaging system for providing biometric data of a person, comprising
- a receiver for receiving electromagnetic waves propagating from the person's skin after reflection of an incident electromagnetic wave, wherein the receiver is arranged for receiving, in a non-coherent manner, electromagnetic waves in the millimetre range, and
a computer system that is arranged for processing the received electromagnetic waves independently of any characteristic of the incident electromagnetic wave.

2. An electromagnetic imaging system according to claim 1, wherein a central frequency of the received electromagnetic waves is in a range from circa 1 GHz to circa 1 THz.

3. An electromagnetic imaging system according to claim 1 or 2, wherein a central frequency of the received electromagnetic waves is in a range from circa 10 GHz to 100 GHz.

4. An electromagnetic imaging system according to any previous claim, wherein the system is coupled with a separate biometric system.

5. An electromagnetic imaging system according to any previous claim, wherein the receiver is implemented as a radiometer.

6. An electromagnetic imaging system according to any previous claim, comprising an additional receiver for receiving the electromagnetic waves, wherein the receivers are preferably positioned substantially transversely with respect to a line of sight to the person, and wherein the computer system is arranged for also processing the electromagnetic waves received by the additional receiver.

7. An electromagnetic imaging system according to any previous claim, comprising an assembly of receiver elements wherein each of the receiver elements is optimized for receiving signals in a predetermined part of the millimetre wave electromagnetic spectrum.

8. An electromagnetic imaging system according to any previous claim, further comprising an external source for generating the incident field.

9. An electromagnetic imaging system according to any previous claim, wherein the external source comprises a broadband non-coherent noise generator.

10. An electromagnetic imaging system according to any previous claim, further comprising a multiple number of external sources for generating the incident field.

11. A method for providing biometric data of a person, comprising the steps of:
- receiving, in a non-coherent manner, electromagnetic waves in the millimetre range propagating from the person's skin after reflection of an incident electromagnetic wave; and
- processing the received electromagnetic waves independently of any characteristic of the incident electromagnetic wave.

12. A method according to claim 11, wherein the processing step comprises detecting features of the trunk and/or limb features of the person.

13. A method according to claim 11 or 12, wherein the processing step comprises assigning numerical values to a biometric model.

14. A method according to any of claims 11-13, wherein the source and/or the receiver scan the person's skin.

15. A method according to any of the claims 11-14, wherein the process of receiving the reflected wave is contactless with respect to the person's skin.

16. A computer program product for providing biometric data of a person, the computer program product comprising computer readable code for causing a processor to perform the step of processing electromagnetic waves, in the millimetre range, that have been received, in a non-coherent manner, the electromagnetic waves propagating from the person's skin after reflection of an incident electromagnetic wave, wherein the processing step is performed independently of any characteristic of the incident electromagnetic wave.
